# EUROPÄISCHE PATENTSCHRIFT

(11) **EP 3 401 585 B1**
(45) Veröffentlichungstag und Bekanntmachung des Hinweises auf die Patenterteilung: **13.01.2021**
(21) Anmeldenummer: 18169082.7
(22) Anmeldetag: 24.04.2018
(51) Int. Cl.: F16L 45/00, E03F 7/04, F16L 55/10, F16L 55/105

(54) **RÜCKSTAUVORRICHTUNG FÜR ROHRLEITUNGEN**
BLOCKAGE DEVICE FOR PIPES
DISPOSITIF DE RETENUE POUR TUYAUTERIE

(30) Priorität: 10.05.2017 AT 503852017
(43) Veröffentlichungstag der Anmeldung: 14.11.2018
(73) Patentinhaber: Adeva GmbH, 1010 Wien (AT)
(72) Erfinder: Paier, Thomas, 3352 Peter in der Au (AT)
(74) Vertreter: Vinazzer, Edith

(56) Entgegenhaltungen:
- WO-A1-03/097949
- JP-U- S63 141 274

## Beschreibung

Die Erfindung betrifft eine Rückstauvorrichtung für im Wesentlichen waagrecht verlaufende bzw. verbaute, zumindest eine obere, verschliessbare Reinigungsöffnung aufweisende Rohre, insbesondere für Abwasser-oder Kanalrohre, mit einer sich in Fließrichtung öffnende Klappe, welche zwischen einer Stauposition und einer hochgeklappten Position schwenkbar ist, und mit einem an die Rohrinnenwand abdichtend anlegbaren Einsatz, an welchem die Klappe schwenkbar angeordnet ist.

Rückstauvorrichtungen sind schon seit langem bekannt und beispielsweise auch in Normen, etwa der DIN EN 13564-2:2002, bezüglich ihrer Eigenschaften und Anforderungen beschrieben. Die üblicherweise in jenen Rohrabschnitten von Abwasser- oder Kanalrohren, die waagrecht oder mit geringer Neigung zur Waagrechten verlaufen, vorgesehenen Rückstauvorrichtungen sind fest eingebaut und relativ komplex gestaltet. Die bekannten Rückstauvorrichtungen sind daher für einen nachträglichen Einbau in bereits verlegte Rohre nicht geeignet. Ist in einem bereits verlegten Abwasser- oder Kanalrohr ein nachträglicher Einbau einer Rückstauvorrichtung erforderlich geworden oder erwünscht, so ist dies nur mit großem baulichen Aufwand, etwa dem Austausch eines Rohrabschnittes, möglich.

Eine Rückstauvorrichtung eingangs genannter Art ist aus der WO 03/097949 A1 bekannt.

Der Erfindung liegt somit die Aufgabe zugrunde, eine Rückstauvorrichtung zur Verfügung zu stellen, die sich ohne besondere bauliche Maßnahmen an den verlegten Rohren vornehmen zu müssen und ohne spezielle Werkzeuge nachträglich einbauen lässt.

Gelöst wird die gestellte Aufgabe erfindungsgemäß dadurch, dass sie ein separater, über die Reinigungsöffnung ins Rohrinnere einsetzbarer Bauteil ist, wobei der Einsatz an der Rohrinnenwand beim Rand der Reinigungsöffnung abdichtend anlegbar ist und an seinem oberen Randbereich je einen im eingesetztem Zustand in und einen gegen die Fließrichtung weisenden, elastisch bewegbaren Stutzflügel mit je einem Anschlagelement an seiner Oberseite aufweist, sodass im eingesetztem Zustand der Rückstauvorrichtung der eine Stützflügel an der Innenwand des Rohres und das am anderen Stützflügel befindliche Anschlagelement am Rand der Reinigungsöffnung abstützbar sind.

Die erfindungsgemäße Rückstauvorrichtung lässt sich daher nachträglich durch die Reinigungsöffnung eines Rohres ohne spezielle Werkzeuge und ohne Umbauten an der Rohrleitung vornehmen zu müssen einbauen. Durch den sich an der Rohrinnenwand abstützenden Stützflügel und das am Rand der Öffnung abstützende Anschlagelement ist die Rückstauvorrichtung auf eine unter allen Bedingungen sichere Weise im Rohr gehalten.

Gemäß einer bevorzugten Ausführung ist die Klappe derart am Einsatz angeordnet, dass sie im eingesetzten Zustand der Rückstauvorrichtung und in ihrer Stauposition unter einem Winkel von 10° bis 25° senkrecht zur Fließrichtung verläuft. Ein sicheres Schließen der Klappe durch ihr Eigengewicht ist daher gewährleistet.

Bei einer weiteren bevorzugten Ausführung weist der Einsatz zwei äußere ringartige Elemente auf, die im oberen Bereich aneinander anschließen und zwei zueinander V-förmig verlaufende Abschnitte aufweisen, wobei zwischen den ringartigen Elementen ein den Zwischenraum überdeckendes Wandelement vorgesehen ist. Auf diese Weise bildet der Einsatz ein stabiles Gehäuse für den Einbau der Rückstauvorrichtung und die Anordnung der Klappe. Diese Ausführung gestattet es auch, den Einsatz von seinen Abmessungen her derart auszugestalten, dass er durch die Reinigungsöffnung des Rohres oder Rohrputzstückes hindurch in das Rohrinnere eingebracht werden kann.

Bei einer weiteren bevorzugten Ausführung sind die Stützflügel flächige Elemente, die jeweils mit zumindest einer durchgehenden Öffnung bzw. zumindest einem Loch versehen sind. Auf diese einfache Weise kann die bereits erwähnte elastische Beweglichkeit der Stützflügel sichergestellt werden.

Besonders vorteilhaft ist ferner eine Ausführung der Anschlagelemente mit einander zugewandten Seitenflächen, die gemäß den gerundeten Randbereichen der Reinigungsöffnung gerundet sind. Somit ist eine optimale Abstützung des jeweiligen Anschlagelementes am Rand der Öffnung der Reinigungsöffnung möglich.

Bevorzugt ist die Klappe im Wesentlichen rechteckig gestaltet und innerhalb des einen ringartigen Elementes des Einsatzes schwenkbar angelenkt. Diese Maßnahme ist nicht nur für eine kompakte Ausführung der Rückstauvorrichtung günstig, sondern auch einen optimalen Öffnungswinkel der Klappe sicher.

Bei einer weiteren vorteilhaften Ausgestaltung weist die Klappe eine untere gerundete Begrenzungskante auf, die in der Stauposition der Klappe der Rundung im unteren Bereich des ringartigen Elementes folgt. In der geöffneten Lage der Klappe ist daher ein weitgehend ungehinderter Durchfluss des im Rohr fließenden Mediums möglich.

Bei einer weiteren bevorzugten Ausführung sind am ringartigen Element Wandelemente vorgesehen, die gemeinsam mit dem unteren kreisbogenförmigen Bereich des ringartigen Elementes eine Öffnung umschließen, die von der Klappe verschließbar ist. Auch diese Ausgestaltung ist für einen ungehinderten Durchfluss und andererseits für ein optimales Öffnen und Schließen der Klappe der Rückstauvorrichtung von Vorteil.

Um bei Bedarf ein Fixieren der Klappe in der verschlossenen Position zu ermöglichen, können von jenem ringartigen Element, in dessen Bereich die Klappe angeordnet ist, Laschen mit Öffnungen abstehen. Durch die Öffnungen lässt sich ein beispielsweise stabförmiges Verschlusselement einführen, welches an der Außenseite der Klappe anliegend ein Öffnen derselben verhindert.

Um ein möglichst dichtes Einsetzen der Rückstauvorrichtung in das Rohr zu ermöglichen, sind die ringartigen Elemente von je einer Dichtung umlaufen. Auch die Klappe soll in ihrer verschlossenen Lage möglichst dicht anliegen und ist daher an ihrem Rand ebenfalls mit einer Dichtung versehen.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Schrägansicht einer Rückstauvorrichtung mit verschlossener Klappe,
Fig.2 eine Schrägansicht der Rückstauvorrichtung mit geöffneter Klappe,
Fig. 3 eine Schrägansicht der Rückstauvorrichtung von oben,
Fig. 4. eine Seitenansicht der Rückstauvorrichtung und,
Fig. 5a bis 5f unterschiedliche Stadien während der Montage der Rückstauvorrichtung über eine Reinigungsöffnung eines Rohres.

In der nachfolgenden Beschreibung und in den Patentansprüchen beziehen sich Bezeichnungen wie oben, unten, waagrecht, senkrecht und dergleichen auf die Darstellungen in den Figuren und die Einbauposition der Rückstauvorrichtung in einem Rohr oder Rohrstück.

Die Rückstauvorrichtung 1 ist zum nachträglichen Einbau in ein Rohr, insbesondere ein Rohrputzstück, mit einer mit einem Deckel verschließbaren Reinigungsöffnung vorgesehen. Es handelt sich um Abwasser- oder Kanalrohre, die im Wesentlichen waagrecht verlaufend verlegt sind, sodass sich jede Reinigungsöffnung an der Oberseite der Rohrwand befindet und von oben gut zugänglich ist. Die Rückstauvorrichtung gemäß der Erfindung wird, wie noch beschrieben wird, über die Reinigungsöffnung eingebracht und weist einen oberen, dem oberen Bereich der Rohrinnenwand zugeordneten und einen unteren, dem unteren Bereich der Rohrinnenwand zugeordneten Bereich auf.

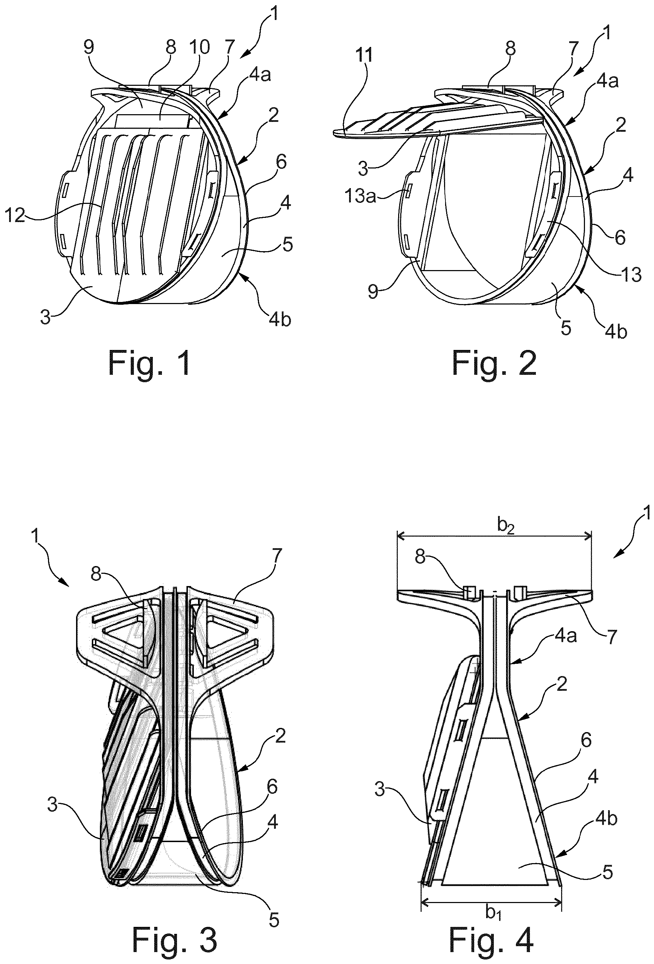

Die Figuren 1 bis 4 zeigen eine Rückstauvorrichtung 1 mit einem einteilig ausgeführtem Einsatz 2 und einer an diesem schwenkbar gelagerten Klappe 3. Der Einsatz 2 sowie die Klappe 3 sind aus einem insbesondere thermoplastischen Kunststoff durch Spritzgiessen hergestellte Teile. Der Einsatz 2 ist von den äußeren Abmessungen und seiner äußeren Gestalt an den Innendurchmesser und die kreisförmige Ausführung des Querschnittes des Rohres oder Rohrstückes, in welches die Rückstauvorrichtung 1 eingesetzt wird, angepasst. Der Einsatz 2 weist zwei ringartig gestaltete Elemente 4 auf, die parallel zueinander verlaufende obere Abschnitte 4a, die an einander angrenzen, und zueinander V-förmig verlaufende untere Abschnitte 4b aufweisen, die über ein entsprechend gerundet ausgeführtes Wandelement 5 miteinander verbunden sind und miteinander einen spitzen Winkel von 20° bis 50° einschließen. Jedes ringartige Element 4 ist außenseitig von einer Dichtung 6 umlaufen, die für eine Abdichtung gegenüber der Rohrinnenwand sorgt. Die Dichtung 6 kann eine eingesetzte Ringdichtung sein oder bei der Herstellung des Einsatzes integriert worden sein.

Am oberen Bereich des Einsatzes 2 sind zwei Stützflügel 7 ausgebildet, wobei jeder Stützflügel 7 von einem der ringartigen Elemente 4 im Wesentlichen im rechten Winkel absteht. Bei der gezeigten Ausführung weisen die Stützflügel 7 in Draufsicht im Wesentlichen eine äußere Kontur in der Gestalt eines gleichschenkeligen Trapezes auf. Jeder Stützflügel 7 ist ferner mit Durchbrüchen bzw. Löchern versehen und derart ausgeführt, dass er sich gegenüber den ringartigen Elementen 4 in einem gewissen Bereich elastisch federnd bewegen kann. An der Oberseite jedes Stützflügels 7 befindet sich beim jeweiligen ringartigen Element 4 ein bei der gezeigten Ausführung in Draufsicht halblinsenförmiges Anschlagelement 8, wobei die Anschlagelemente 8 derart angeordnet sind, dass ihre Rundungen einander zugewandt sind. Die Rundung am Anschlagselement 8 entspricht vorzugsweise der Rundung der Reinigungsöffnung im Rohr in jenen Bereichen, die die Reinigungsöffung in und gegen die Fließrichtung begrenzen. Der Einsatz 2 weist am unteren Ende der zueinander V-förmigen Abschnitte 4b der ringartigen Elemente 4 eine Breite b₁ auf, welche geringer ist als die Breite der Reinigungsöffnung im Rohr. Die Breite b₂ am gegenüberliegenden oberen Endbereich des Einsatzes 2 entspricht, unter Einbezug der Erstreckung der Stützflügel 7, im Wesentlichen der Breite b₁ bzw. weicht um höchstens 20 % von der Breite b₁ ab.

Die Klappe 3 ist ein im Wesentlichen rechteckiger Bauteil und innerhalb des einen ringartigen Elementes 4 am Einsatz 2 schwenkbar angelenkt. Innenseitig dieses ringartigen Elementes 4 sind Wandelemente 9 ausgebildet, die eine an die Klappe 3 angepasste Öffnung umschließen und an deren Rand ein flüssigkeitsdichtes Aufliegen des Randes der Klappe 3 erfolgt. Der untere Rand der Klappe 3 ist der Rundung des ringartigen Elementes 4 folgend ausgeführt und verläuft bei eingebauter Rückstauvorrichtung 1 und in der geschlossenen Lage der Klappe 3 entlang des unteren Bereiches der gleichermaßen gerundeten Rohrinnenwand. Die Klappe 3 ist am oberen Wandelement 9 unterhalb des Stützflügels 7 im Bereich des Abschnittes 4a mittels eines Scharniers 10 angelenkt. Eine am Rand der Klappe 3 angeordnete Dichtung 11 sorgt für ein dichtes Verschließen der Rückstauvorrichtung 1 in der Stauposition der Klappe 3.

An ihrer Außenseite ist die Klappe 3 mit einer Anzahl von insbesondere parallel zueinander verlaufenden Versteifungsrippen 12 versehen. Von jenem ringartigen Element 4, in dessen Bereich die Klappe 3 angeordnet ist, stehen ferner seitlich Laschen 13 vor, welche mit jeweils zumindest einer Öffnung 13a versehen sind, sodass in der geschlossenen Lage der Klappe 3 quer über die Klappe 3 zumindest ein Verschlusselement, beispielsweise ein stabförmiges Element, durch Einsetzen in jeweils eine Öffnung 13a jeder Lasche 13 spannbar ist, um die Klappe 3 bei Bedarf in ihrer geschlossenen Lage zu halten.

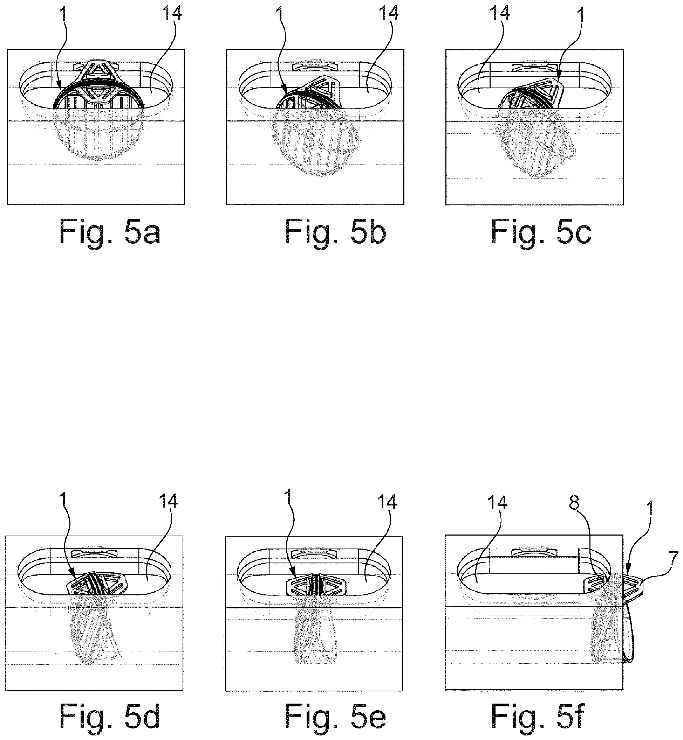

Die Montage der Rückstauvorrichtung 1 wird nun anhand der Figuren 5a bis 5f kurz erläutert. Diese Figuren zeigen jeweils jenen Abschnitt eines Rohres oder Rohrputzstückes, in welchem eine in Rohrlängsrichtung verlaufende Reinigungsöffnung 14, die mit einem nicht gezeigten Deckel verschließbar ist, ausgebildet ist. Die Rückstauvorrichtung 1 wird mit verschlossener Klappe 3 und mit ihrem unteren Bereich voran quer zur Rohrlängsrichtung durch die Öffnung 14 in das Rohrinnere eingebracht (Fig. 5a und 5b) und durch Drehen um 90° in ihre Sollposition, mit der Klappe 3 in Fließrichtung, gedreht (Fig. 5c bis 5e). Das Kunststoffmaterial des Einsatzes 2 gestattet eine etwaig erforderliche geringfügige Deformation der Seitenbereiche des Einsatzes 2 während des Drehens. Die entsprechend gedrehte Rückstauvorrichtung 1 wird nun in ihre Position am Randbereich der Öffnung 14 verschoben, bis die am Einsatz 2 vorgesehenen Dichtungen 6 unmittelbar hinter der Öffnung 14 mit der rundum geschlossenen Rohrinnenwand in Kontakt kommen, wobei der mit der Rohrinnenwand in Kontakt kommende Stützflügel 7 durch sein Anschlagelement 8 etwas nach unten gedrückt ist und sich an der Rohrinnenwand abstützt. Der andere Stützflügel 7 ragt in den Bereich der Öffnung 14, das auf ihm befindliche Anschlagelement 8 liegt mit seiner Rundung am Rand der Öffnung 14 an.

Auf analoge Weise kann eine zweite Rückstauvorrichtung 1 im Bereich des zweiten, der Fließrichtung zugeordneten Randbereiches positioniert werden.

### Bezugsziffernliste

- 1 ............................: Rückstauvorrichtung
- 2 ............................: Einsatz
- 3 ............................: Klappe
- 4 ............................: Element
- 4a, 4b ....................: Abschnitt
- 5 ............................: Wandelement
- 6 ............................: Dichtung
- 7 ............................: Stützflügel
- 8 ............................: Anschlagelement
- 9 ............................: Wandelement
- 10 ..........................: Scharnier
- 11 ..........................: Dichtung
- 12 ..........................: Versteifungsrippe
- 13 ..........................: Lasche
- 13a ........................: Öffnung
- 14 ..........................: Öffnung
- b₁, b₂, ....................: Breite

## Patentansprüche

1. Rückstauvorrichtung (1) für im Wesentlichen waagrecht verlaufende bzw. verbaute, zumindest eine obere, verschliessbare Reinigungsöffnung (14) aufweisende Rohre, insbesondere für Abwasser-oder Kanalrohre, mit einer sich in Fließrichtung öffnende Klappe (3), welche zwischen einer Stauposition und einer hochgeklappten Position schwenkbar ist, und mit einem an die Rohrinnenwand abdichtend anlegbaren Einsatz (2), an welchem die Klappe (3) schwenkbar angeordnet ist,
**dadurch gekennzeichnet,**
**dass** sie ein separater, über die Reinigungsöffnung (14) ins Rohrinnere einsetzbarer Bauteil ist, wobei der Einsatz (2) an der Rohrinnenwand beim Rand der Reinigungsöffnung (14) abdichtend anlegbar ist und an seinem oberen Randbereich je einen im eingesetztem Zustand in und einen gegen die Fließrichtung weisenden, elastisch bewegbaren Stutzflügel (7) mit je einem Anschlagelement (8) an seiner Oberseite aufweist, sodass im eingesetztem Zustand der Rückstauvorrichtung (1) der eine Stützflügel (7) an der Innenwand des Rohres und das am anderen Stützflügel (7) befindliche Anschlagelement (8) am Rand der Reinigungsöffnung (14) abstützbar sind.

2. Rückstauvorrichtung (1) nach Anspruch 1, **dadurch gekennzeichnet, dass** die Klappe (3) derart am Einsatz (2) angeordnet ist, dass sie im eingesetzten Zustand der Rückstauvorrichtung (1) und in ihrer Stauposition unter einem Winkel von 10° bis 25° senkrecht zur Fließrichtung verläuft.

3. Rückstauvorrichtung (1) nach Anspruch 1 oder 2, **dadurch gekennzeichnet, dass** der Einsatz (2) zwei äußere ringartige Elemente (4) aufweist, die im oberen Bereich aneinander anschließen und zwei zueinander V-förmig verlaufende Abschnitte (4b) aufweisen, wobei zwischen den ringartigen Elementen (4) ein den Zwischenraum überdeckendes Wandelement (5) vorgesehen ist.

4. Rückstauvorrichtung (1) nach einem der Ansprüche 1 bis 3, **dadurch gekennzeichnet, dass** die Stützflügel (7) flächige Elemente sind, die jeweils mit zumindest einer durchgehenden Öffnung versehen sind.

5. Rückstauvorrichtung (1) zum nachträglichen Einsetzen über eine Reinigungsöffnung (14), die an ihren in Rohrlängsrichtung befindlichen Randbereichen gerundet ist, nach einem der Ansprüche 1 bis 4, **dadurch gekennzeichnet, dass** die Anschlagelemente (8) einander zugewandte Seitenflächen aufweisen, die gemäß den gerundeten Randbereichen der Reinigungsöffnung (14) gerundet sind.

6. Rückstauvorrichtung (1) nach einem der Ansprüche 1 bis 5, **dadurch gekennzeichnet, dass** die Klappe (3) im Wesentlichen rechteckig gestaltet ist und innerhalb des einen ringartigen Elementes (4) des Einsatzes (2) schwenkbar angelenkt ist.

7. Rückstauvorrichtung nach einem der Ansprüche 1 bis 6, **dadurch gekennzeichnet, dass** die Klappe (3) eine untere gerundete Begrenzungskante aufweist, die in der Stauposition der Klappe (3) der Rundung im unteren Bereich des ringartigen Elementes (4) folgt.

8. Rückstauvorrichtung (1) nach 7, **dadurch gekennzeichnet, dass** am ringartigen Element (4) Wandelemente (9) vorgesehen sind, die gemeinsam mit dem unteren kreisbogenförmigen Bereich des ringartigen Elementes (4) eine Öffnung umschließen, die von der Klappe (3) verschließbar ist.

9. Rückstauvorrichtung nach einem der Ansprüche 1 bis 8, **dadurch gekennzeichnet, dass** von jenem ringartigen Element (4), in dessen Bereich die Klappe (3) angeordnet ist, Laschen (13) mit Öffnungen (13a) abstehen.

10. Rückstauvorrichtung nach einem der Ansprüche 1 bis 9, **dadurch gekennzeichnet, dass** die ringartigen Elemente (4) von je einer Dichtung (6) umlaufen sind.

11. Rückstauvorrichtung nach einem der Ansprüche 1 bis 10, **dadurch gekennzeichnet, dass** am Rand der Klappe (3) eine Dichtung (11) vorgesehen ist.

## Claims

1. Back flow device (1) for essentially horizontally running or installed pipes having at least one upper, closable cleaning opening (14), used particularly for waste water or sewer pipes with a flap (3) opening in the direction of flow, which can be pivoted between a damming position and a fully raised position, and with a insert (2) configured to seal against the inner wall of the pipe on which the flap (3) is disposed to pivot,
**characterised in that**
it is a separate component that can be inserted inside the pipe through the cleaning opening (14), wherein the insert (2) can be configured to seal on the inner wall of the pipe at the rim of the cleaning opening (14), and has on its upper rim region, respectively, a supporting wing (7) elastically movable in the inserted state pointing in the direction of flow and a supporting wing (7), respectively elastically movable pointing against the direction of flow, in each case with a stop element (8) on its upper side, so that, in the inserted state of the back flow device (1), the one supporting wing (7) is supported on the inner wall of the pipe and the stop element (8) located on the other supporting wing (7) can be supported on the rim of the cleaning opening (14).

2. Back flow device (1) in accordance with claim 1, **characterised in that** the flap (3) is disposed on the insert (2) such that, in the inserted state of the back flow device (1) and in its damming position, it runs at an angle of 10° to 25° perpendicular to the direction of flow.

3. Back flow device (1) in accordance with claim 1 or 2, **characterised in that** the insert (2) has two outer ring-shaped elements (4) which close against each other in the upper region and have two V-shaped sections (4b) running towards each other wherein, between the ring-shaped elements (4), a wall element (5) covering the intermediate space is provided.

4. Back flow device (1) in accordance with any one of the claims 1 to 3, **characterised in that** the supporting wings (7) are flat elements, each of which are provided with at least one through opening.

5. Back flow device (1) for subsequent insertion through a cleaning opening (14), which is rounded on its rim regions located in the longitudinal direction of the pipe, in accordance with any one of the claims 1 to 4, **characterised in that** the stop elements (8) have side faces turned towards one another, wherein said side faces are rounded to match the rounded rim regions of the cleaning opening (14).

6. Back flow device (1) in accordance with any one of the claims 1 to 5, **characterised in that** the flap (3) is designed to be essentially right-angled and is hinged to pivot inside the one ring-shaped element (4) of the insert (2).

7. Back flow device in accordance with any one of the claims 1 to 6, **characterised in that** the flap (3) has a lower rounded delimiting rim which, in the damming position of the flap (3) matches the rounding in the lower region of the ring-shaped element (4).

8. Back flow device (1) in accordance with 7, **characterised in that** wall elements (9) are provided on the ring-shaped element (4) which, together with the lower circular arc-shaped region of the ring-shaped element (4) surround an opening which can be closed by the flap (3).

9. Back flow device in accordance with any one of the claims 1 to 8, **characterised in that** lugs (13) with openings (13a) project from each ring-shaped element (4) in whose region the flap (3) is disposed.

10. Back flow device in accordance with any one of the claims 1 to 9, **characterised in that** the ring-shaped elements (4) are each encircled with a seal (6).

11. Back flow device in accordance with any one of the claims 1 to 10, **characterised in that** a seal (11) is provided at the rim of the flap (3).

## Revendications

1. Dispositif anti-refoulement (1) pour des tuyaux s'étendant ou montés essentiellement horizontalement présentant au moins un orifice de nettoyage (14) supérieur refermable, notamment pour les tuyaux d'égout et de canalisation, avec un clapet (3) s'ouvrant dans la direction de l'écoulement, pivotable entre une position de retenue et une position relevée, et avec un insert (2) applicable de façon étanche à la paroi intérieure du tuyau, sur lequel le clapet (3) est disposé de façon pivotante, **caractérisé en ce**
**que** c'est un composant séparé pouvant être inséré à l'intérieur du tuyau à travers l'orifice de nettoyage (14), l'insert (2) étant applicable de façon étanche à la paroi intérieure du tuyau au bord de l'orifice de nettoyage (14) et présentant dans sa zone du bord supérieur une aile d'appui (7) déplaçable élastiquement orientée en état inséré dans la direction de l'écoulement et une autre orientée dans la direction contraire à l'écoulement, chacune avec un élément de butée (8) sur sa face supérieure, de sorte qu'en état inséré du dispositif anti-refoulement (1), l'une aile d'appui (7) sur la paroi intérieure du tuyau et l'élément de butée (8) se trouvant sur l'autre aile d'appui (7) s'appuient sur le bord de l'orifice de nettoyage (14).

2. Dispositif anti-refoulement (1) selon la revendication 1, **caractérisé en ce que** le clapet (3) est disposé sur l'insert (2) de manière à s'étendre verticalement par rapport à la direction de l'écoulement à un angle entre 10° et 25° en état inséré du dispositif anti-refoulement (1) et dans sa position de retenue.

3. Dispositif anti-refoulement (1) selon la revendication 1 ou 2, **caractérisé en ce que** l'insert (2) présente deux éléments annulaires (4) extérieurs qui se raccordent l'un à l'autre dans la zone supérieure et deux parties (4b) s'étendant en forme de V l'une par rapport à l'autre, un élément de paroi (5) recouvrant l'espace intermédiaire étant prévu entre les éléments annulaires (4).

4. Dispositif anti-refoulement (1) selon l'une quelconque des revendications de 1 à 3, **caractérisé en ce que** les ailes d'appui (7) sont des éléments plats, munie chacune d'au moins une ouverture continue.

5. Dispositif anti-refoulement (1) destiné à l'insertion ultérieure à travers un orifice de nettoyage (14), arrondi sur ses bords se trouvant dans la direction longitudinale du tuyau, selon l'une quelconque des revendications de 1 à 4, **caractérisé en ce que** les éléments de butée (8) présentent des surfaces latérales se faisant face qui sont arrondies conformément aux bords arrondis de l'orifice de nettoyage (14).

6. Dispositif anti-refoulement (1) selon l'une quelconque des revendications de 1 à 5, **caractérisé en ce que** le clapet (3) est de forme essentiellement rectangulaire et est articulé de manière pivotante à l'intérieur de l'un élément annulaire (4) de l'insert (2).

7. Dispositif anti-refoulement selon l'une quelconque des revendications de 1 à 6, **caractérisé en ce que** le clapet (3) présente un bord de délimitation arrondi inférieur qui suit l'arrondi dans la zone inférieure de l'élément annulaire (4) en position de retenue du clapet (3).

8. Dispositif anti-refoulement (1) selon la revendication 7, **caractérisé en ce que** des éléments de paroi (9) sont prévus sur l'élément annulaire (4), qui entourent avec la zone circulaire inférieure de l'élément annulaire (4) une ouverture refermable par le clapet (3).

9. Dispositif anti-refoulement selon l'une quelconque des revendications de 1 à 8, **caractérisé en ce que** des languettes (13) avec orifices (13a) s'étendent depuis cet élément annulaire (4), dans la zone duquel le clapet (3) est disposé.

10. Dispositif anti-refoulement selon l'une quelconque des revendications de 1 à 9, **caractérisé en ce que** les éléments annulaires (4) sont entourés chacun par un joint (6).

11. Dispositif anti-refoulement selon l'une quelconque des revendications de 1 à 10, **caractérisé en ce qu'**un joint (11) est prévu sur le bord du clapet (3).
